# DEMANDE DE BREVET EUROPEEN

(11) **EP 3 671 500 A1**
(43) Date de publication de la demande: **24.06.2020**
(21) Numéro de dépôt: 18306788.3
(22) Date de dépôt: 21.12.2018
(51) Int. Cl.: G06F 21/32, G06Q 20/40

(54) **PROCEDE ET SYSTEME D ENROLEMENT AUTONOME ASSISTE POUR DETENTEUR DE DISPOSITIF BIOMETRIQUE**

(71) Demandeur: Thales Dis France SA, 92190 Meudon (FR)
(72) Inventeur: CHAFER, Sylvain, 13881 Gémenos Cedex (FR); FAVREAU, Valentin, 13881 Gémenos Cedex (FR); ZEAMARI, Ali, 13881 Gémenos Cedex (FR)
(74) Mandataire: Milharo, Emilien

(57) **Abrégé**

L'invention concerne un procédé d'enrôlement de données biométriques d'un utilisateur dans un dispositif portable (1) de saisie biométrique dans lequel, le procédé met en oeuvre des étapes:
- d'assistance aux différentes étapes de l'enrôlement via un terminal (3) de communication, par des interactions successives entre le terminal et ledit dispositif tout au long de l'enrôlement ;
Le procédé est caractérisé en que chaque interaction met en oeuvre au moins une commande de lecture du terminal pour lire des informations contenues ou affichées dans ledit dispositif,
et en ce que chaque information est générée ou sélectionnée par le dispositif à différentes étapes de l'enrôlement.

L'invention concerne également le système correspondant.

## Description

L'invention concerne un procédé et système d'enrôlement autonome pour détenteur de dispositif biométrique.

L'invention concerne particulièrement les systèmes d'enrôlement biométrique d'utilisateur comprenant des dispositifs biométriques et un terminal de communication. Les dispositifs peuvent comprendre par exemple des cartes à puce munies de capteur ou de lecteur biométrique notamment d'empreinte digitale et les terminaux peuvent être de préférence portable, comme un téléphone intelligent et avoir une fonction de communication NFC (acronyme anglais de Near Field communication signifiant communication radiofréquence par champ proche).

Parmi les dispositifs biométriques, l'invention peut concerner particulièrement les cartes à puce mais peut concerner également tout produit ou dispositif électronique qui utilise des éléments de sécurité biométriques par exemple, des clés USB, des montres, des bracelets, des objets à porter (Wearables en anglais).

Les cartes sans-contact à capteur biométrique représentent une nouvelle génération de cartes de paiement, générant de fortes attentes des utilisateurs (porteurs, titulaires ou détenteurs) de cartes et l'intérêt des banques.

Cet intérêt s'explique par le côté pratique de telles cartes (pas besoin de mémoriser un code PIN) et de la sécurité qu'elles apportent grâce au capteur d'empreintes digitales intégré dans la carte et utilisé pour authentifier le titulaire / utilisateur de la carte.

Cependant, une des étapes critiques de l'expérience utilisateur est le processus d'inscription / enrôlement consistant à collecter un modèle de référence pour les empreintes digitales du détenteur de la carte et de mémoriser ce modèle de référence dans la carte pour la personnaliser de manière biométrique.

L'enrôlement biométrique à l'aide d'une carte à puce équipée d'un capteur biométrique est un défi en termes d'expérience utilisateur en raison notamment de capacités d'affichage limitées de la carte. L'enrôlement biométrique est un processus complexe nécessitant plusieurs étapes suivantes:
- La carte peut requérir une alimentation en énergie de différentes manières, ce qui peut entraîner différentes actions spécifiques de l'utilisateur ;
- Un doigt doit être présenté un certain nombre de fois sur le capteur afin de capturer suffisamment de données biométriques. Le nombre de fois qu'un doigt doit être présenté dépend en fait de la technologie biométrique sous-jacente utilisée pour la correspondance et l'extraction de données biométriques ;
- Dans certains cas d'utilisation, plusieurs doigts doivent être traités ;
- L'identité de l'utilisateur peut être vérifiée avant de valider les données biométriques, et cela peut être réalisé à l'aide de différentes techniques.

Selon la technologie utilisée, il peut y avoir plusieurs variantes de ce processus et par conséquent le processus à suivre par l'utilisateur pour un type de carte peut être difficile à identifier.

En outre, tout au long de ce processus, les choses peuvent ne pas fonctionner comme prévu et cela peut empêcher les utilisateurs de finaliser le processus d'enrôlement et les conduire à recourir une assistance, ce qui, dans la plupart des cas, consistera à ramener la carte à la succursale de la Banque.

Non seulement tout cela est préjudiciable à l'expérience utilisateur, mais engendrera pour les banques vraisemblablement des frais supplémentaire d'assistance supplémentaire et enfin cela peut compromettre l'adoption des systèmes d'enrôlement autonome par le public.

Une solution actuelle pour résoudre ce problème d'enrôlement consiste à ajouter des diodes LEDs colorées à une carte à puce pour donner des informations simples codées à un utilisateur. Toutefois, cette solution ajoute des contraintes de gestion de puissance et ne permet pas d'aider un utilisateur à solutionner des situations anormales ou compliquées.

Certains messages colorés ou clignotants sur des LEDs peuvent aider à diagnostiquer des problèmes avec plus de précision, mais ils seront difficiles à décoder pour les utilisateurs non avertis ou non habitués aux nouvelles techniques. Dans la plupart des cas un clignotement de diode LED rouge fera comprendre à l'utilisateur qu'il doit ramener la carte à la succursale de banque la plus proche, ce qui manifestement ne procure pas une bonne expérience utilisateur et entraîne des frais supplémentaires.

On connait également une méthode consistant à utiliser un téléphone NFC afin d'assister les utilisateurs dans le processus d'enrôlement. Cependant, les applications logicielles d'assistance ne peuvent être mises en oeuvre que sur des plateformes mobiles fournissant des services NFC étendus aux applications logicielles (c'est-à-dire seulement sur des plateformes fonctionnant essentiellement avec le système d'exploitation Android). En outre, cette solution a une contrainte forte car elle nécessite une batterie dans la carte et ajoute l'inconvénient de la durée de vie de la batterie.

De nombreux téléphones mobiles aujourd'hui ont des interfaces de communication sans-contact (NFC), cependant, certains mobiles imposent des restrictions strictes sur ce qu'une application peut faire avec l'interface sans contact et certains de ces mobiles permettent seulement un accès en « lecture» à l'aide du protocole de formats de données NDEF (NFC Data Exchange Format), ce qui signifie qu'il n'est pas possible d'utiliser ces téléphones mobiles pour EMV, CAP ou ICP (Signatures électroniques), ou toute autre opération nécessitant d'envoyer des commandes APDU spécifiques à la carte à puce.

Cela impose une restriction forte sur ce qui peut être fait avec la carte, puisque il est seulement possible de lire les données en utilisant le protocole NDEF et qui empêche une application logicielle mobile d'accéder à des fonctions de communication APDU sur la carte.
Concernant les cartes à puce (ou cartes à puce électroniques), elles sont souvent utilisés pour les paiements par carte et également l'authentification forte de la clientèle. Les spécifications utilisées sont l'ISO 7816 (interface à contacts de la puce) et l'ISO 14443 (interface sans contact). En un mot, ces normes utilisent des échanges de communications ou de données comprenant une structure de base de commande / réponse, où le terminal (ou le lecteur de carte) envoie une commande et la carte renvoie une réponse correspondante.

Par ailleurs, il existe une autre norme, basé sur l'interface sans contact, qui est appelée "NFC Data Exchange Format » (NDEF), qui est une interface de lecture/écriture, permettant à des de données enregistrées (ou mémorisées) d'être lus et écrit dans une puce de circuit intégré de carte à puce. Lorsque on utilise le type de format NDEF du NFC forum tag type 4, l'application correspondante est autorisée à coexister sur une carte bancaire de type EMV.

### Concernant le format NDEF.

Le forum NFC a défini une structure pour écrire des données sur les étiquettes électroniques RFID ou pour échanger des données entre deux périphériques NFC. Le format est appelé NDEF. Un enregistrement NDEF peut contenir plusieurs différent RTD. Un RTD est un enregistrement pour une seule application logicielle. Un RTD ne peut contenir qu'une information unique telle que du texte, un URI, des données de carte professionnelle ou des données d'appairage pour d'autres technologies.
Le NFC Forum a approuvé quatre types de « tag » (ou enregistrements lisibles via communication NFC) suivants. Tags de type 1 est basé sur ISO/IEC 14443 a. Ce type de tag est capable d'être lu et écrit.
Le tag de type 2 est basé sur ISO/IEC 14443 a. Ce type de tag est capable d'être lu et écrit.
Le tag de type 3 est basé sur la norme industrielle japonaise (JIS) X 6319-4. Ce type de tag est préconfiguré en usine pour être lu et réinscriptible ou seulement lu.
Le tag de type 4 est entièrement compatible avec les standards de l'ISO/IEC 14443 (A \ B). Il est préconfiguré en usine pour être lu et réinscriptible ou seulement lu. Pour une communication utilisant des tags (enregistrements au format NDEF), des commandes APDU selon la norme ISO 7816-4 peuvent être utilisées.

Un « tag NFC » est aussi une étiquette électronique (ou fonctionnant comme telle) équipée de la technologie NFC et contenant des informations pouvant généralement être lus par tout lecteur NFC.

### Résumé de l'invention

L'invention a pour objectif de résoudre les inconvénients exposés ci-dessus.

L'invention proposée vise à améliorer l'expérience utilisateur en simplifiant son enrôlement biométrique.

L'invention prévoit préférentiellement d'utiliser un terminal portable intelligent comportant des capacités NFC de base amplement disponibles sur la plupart des plateformes mobiles (y compris sous système d'exploitation iOS et Android).
- L'invention prévoit notamment d'utiliser une fonction de lecture de base telle que notamment une fonction NFC de lecture de tag NDEF, qui est présent dans la plupart des téléphones NFC, pour établir un canal de communication entre l'application du terminal et un dispositif biométrique tel qu'une carte à puce.
Avantageusement, la fonction de lecture base peut comprendre un mode de lecture NFC, un mode de lecture de code 3D, un mode de lecture de caractères avec OCR...

L'invention prévoit, selon le mode préféré, de concevoir un procédé d'enrôlement biométrique de telle sorte qu'il puisse être géré, assisté ou piloté par une application logicielle mobile élémentaire (de capacité réduite), c'est-à-dire une application logicielle avec un terminal qui ait seulement besoin de capter ou recevoir des informations en un mode de lecture (et de préférence jamais en mode d'écriture) avec la carte afin de guider l'utilisateur tout au long de tout le processus d'enrôlement ;

Ainsi, le procédé d'enrôlement peut être mis en oeuvre ou déployé aisément, sans développement supplémentaire hardware, car compatible avec tout type de plate-forme mobile NFC (y compris iOS).

A cet effet, l'invention a pour objet un procédé d'enrôlement de données biométriques d'un utilisateur dans un dispositif portable de saisie biométrique dans lequel, le procédé met en oeuvre des étapes :
- d'assistance aux différentes étapes de l'enrôlement via un terminal de communication, par des interactions successives entre le terminal et ledit dispositif tout au long de l'enrôlement ; Le procédé se distingue en ce en ce que chaque interaction met en oeuvre au moins une commande de lecture du terminal pour lire des informations contenues ou affichées dans ledit dispositif,
Et en ce que chaque information est générée ou sélectionnée par le dispositif à différentes étapes de l'enrôlement. L'information peut être lue ou générée notamment pendant, à la fin de l'enrôlement ou après la fin de l'enrôlement.

Selon d'autres caractéristiques le procédé :
- Chaque information peut comprendre de préférence des instructions d'assistance élaborées ou sélectionnées dans la carte (dispositif);
- Le procédé peut comprendre une étape d'élaboration ou de sélection d'instructions d'assistance dans le terminal en fonction de chaque information lue dans le dispositif par le terminal et une étape de présentation d'instructions d'assistance ;
- Chaque information peut être, de préférence, générée suite à une détection ou une réception d'une commande du terminal, ou après la collecte ou la capture de nouvelles données biométriques dans le dispositif portable ;
- Chaque information, différente de la précédente est générée dynamiquement et mémorisée dans un fichier interne ; Ce fichier est de préférence destiné à être lu par tout appareil externe ayant une fonction de lecture de base.
- Selon un mode préféré de mise en oeuvre, le procédé comprend une étape de fourniture :
   - d'une application logicielle NDEF dans ledit dispositif portable,
   - d'un premier enregistrement NDEF mémorisé ou généré dans le dispositif NFC,
   - l'application logicielle NDEF étant configuré pour générer un second enregistrement NDEF différant d'un premier enregistrement précédent, basé sur des données recueillies au cours de l'enrôlement ;
- L'enregistrement NDEF peut être créé ou simulé en temps réel à un format compatible avec les enregistrements standards NDEF, ou sélectionné parmi un jeu préétabli d'enregistrements ou de messages NDEF, (pouvant correspondre à des étapes successives d'assistance à l'enrôlement);
- L'enregistrement NDEF est capturé par le terminal NFC dans un mode lecture seule du terminal ;
- L'application logicielle NDEF dans la carte est configurée pour réaliser les opérations suivantes :
   - Utilisation des données associées à des données recueillies, pour générer ou sélectionner des données utiles d'enregistrement NDEF et,
   - recalculer, au cours d'une même session de communication entre terminal NFC et le dispositif NFC, la longueur de l'enregistrement et/ou du message NDEF généré ou sélectionné.
- Le dispositif peut être configuré pour élaborer un enregistrement ou message d'attente ou un message incluant une instruction interprétable par le terminal pour lui demander de lire à nouveau après un délai d'attente ou d'effectuer des lectures successives plus espacées dans le temps.

Ainsi, grâce à la prise en charge omniprésente de la lecture NDEF des plates-formes de téléphonie mobile, les communications basées sur des messages (ou enregistrements) NDEF permettant de lire les données dans une carte à puce à l'aide de différents types de téléphones.
Les mémorisations d'informations ou de messages créés ou affichées par l'invention sont préférablement conformes au format standard de NDEF. Alternativement, ils peuvent aussi être conformes au code de QR, normes de code 2D ou 3D ou tout caractères lisibles par reconnaissance de caractères (OCR).
Normalement, un téléphone en mode lecteur NFC est sensé fournir une alimentation par radiofréquence ; L'invention est donc compatible avec une carte avec ou sans batterie.

En outre, le champ est maintenu tant qu'il y a une session de commande / réponse en instance entre un terminal NFC et un dispositif sans contact.

### Brève description des dessins.

- La figure 1 illustre une vue générale du système conformément à un mode préféré de réalisation de l'invention;
- La figure 2 illustre un dispositif de l'invention sous forme de carte à puce qui peut être utilisée dans le système ci-dessus ; - La figure 3 illustre des étapes du procédé selon un mode préféré de mise en oeuvre de l'invention.
- La figure 4 illustre une architecture matérielle / logicielle possible d'un terminal de communication portable électronique 3 ;
- La figure 5 illustre une architecture matérielle / logicielle possible d'un dispositif de l'invention.

### Description détaillée des figures.

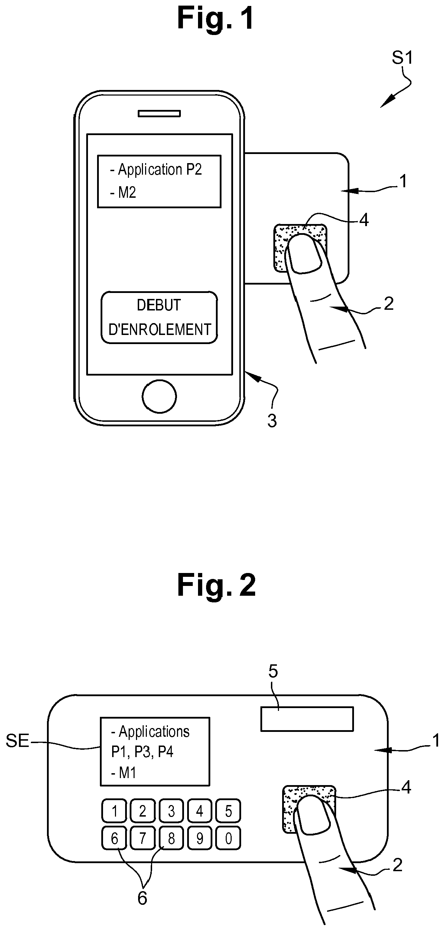

À la figure 1, selon un mode de réalisation préféré de l'invention, il y a une vue d'ensemble d'un système SI d'enrôlement de données biométriques d'un utilisateur 2 dans un dispositif portable de saisie biométrique 1. Il permet aisément de créer une opération d'enrôlement fiable et autonome par un utilisateur dans le dispositif 1.

Le système SI intègre des fonctions d'assistance à l'enrôlement d'un utilisateur. En particulier, il est configuré pour assister l'utilisateur au cours des différentes étapes de l'enrôlement, à l'aide d'un terminal de communication 3, et en mettant en oeuvre ou en effectuant des interactions successives de communication entre le terminal et le dispositif, tout au long du processus d'enrôlement.

A cet effet, le dispositif comporte de préférence, des moyens de capture biométrique ou un capteur de données biométriques de l'utilisateur, tels que dans l'exemple un capteur d'empreinte digitale 4. Tout capteur de données biométrique peut être envisagé comme capteur vocal, capteur optique d'iris, capteur d'image, etc.

Dans l'exemple, le dispositif 1 est sous forme d'une carte à puce sans-contact NFC, mais il peut aussi être sous la forme d'une montre électronique intelligente. En effet, beaucoup de montres intelligentes peuvent avoir une fonction d'émulation de cartes sans-contact et comprendre les mêmes fonctions que des cartes à puce notamment pour des transactions bancaire ou de paiement sans contact. Une montre de ce type comporte un écran qui peut être utilisé pour un enrôlement.

Le dispositif NFC 1 peut également être tout dispositif portable, un appareil de l'IOT (internet des objets), un bracelet électronique, etc.

Dans un autre mode de réalisation (non décrit entièrement) le dispositif (telle qu'une carte) peut comporter un afficheur 5 (notamment selon une technologie du type encre électronique, eInk, amoled, ou bistable), et les messages lus dans le dispositif 1 peuvent être générés et affichés selon un format QR code (code 3d) sur la carte ou code similaire ou lisible par OCR.

Le dispositif électronique portable 1 a des fonctions de communication. Il est destiné à coopérer avec au moins un autre terminal de communication portable électronique 3, comme un smartphone ou tablette multimédia (appelé par la suite indifféremment mobile ou lecteur), ayant capacités de lecture de message contenus (ou affichés) dans le dispositif.

Le système S1 comprend une application logicielle d'enrôlement (ou de gestion de l'enrôlement biométrique) P1 exécutée de préférence dans la carte à puce biométrique (généralement implémentée comme une applet Java Card). Le terme « carte » peut vouloir désigner indifféremment tout dispositif alternatif évoqué dans le cadre de la description. L'application d'enrôlement est configurée pour la capture et/ou la lecture et extraction de minuties pour constituer un modèle de données biométriques.

La carte peut comprendre une application spécifique P3 (bancaire, fidélité, d'accès logique et/ou physique, d'authentification, etc.) qui utilise le résultat d'une authentification biométrique une fois qu'un utilisateur a été enrôlé.

La carte peut comprendre d'autres interfaces (IHM), tel qu'un clavier 6. L'afficheur peut avoir différentes dimensions pour afficher des codes de guidage alphanumériques, ou des codes2D ou 3D contenant des informations plus denses.

Selon un mode préféré, cette application P1 est configurée pour mémoriser ou conserver des informations dans une mémoire M1 de la carte relatives à l'enrôlement biométrique et/ou dans la carte. Ces informations peuvent en général reposer sur (ou comprendre) des informations (ou des données, des renseignements) relatives à la capacité de la carte telle que l'information de carte autoalimentée (active), des capacités diverses (Stockage, protocoles, afficheur 5, interface, appairage...) ou non (passive), les informations sur le nombre de présentations de doigt nécessaire pour assurer un enrôlement correct, etc...

Les informations peuvent aussi comprendre des informations (données, renseignements) concernant le statut courant de l'enrôlement biométrique tel que l'étape courante du processus d'enrôlement, le dernier statut d'erreur rencontré pendant le processus, des informations d'assistance préétablies ou des indications d'assistance interprétables par le terminal.
En cas d'erreur d'enrôlement ou autre, par exemple, un utilisateur dont l'empreinte serait illisible car dégradée. Cette erreur pourrait être lue par l'application du terminal mobile P2 et qui en réponse, suite à interprétation, pourrait déclencher automatiquement une demande de support de la part de l'émetteur.

Le terminal peut interpréter, déduire programme d'analyse ou par intelligence artificielle, des erreurs ou un code d'erreur (interprétable ou non par le terminal) ou des occurrences trop nombreuses d'erreurs ou de situations anormales ; Le terminal peut déclencher suite à l'interprétation ci-dessus, une demande d'assistance à un service dédié d'assistance (ou service clientèle) à l'enrôlement distant (envoi de SMS, message internet pour par exemple demander d'appeler l'utilisateur immédiatement pour l'aider dans son enrôlement).

L'information, composée ou préétablie par le dispositif 1 et destinée à être lue par le terminal 3, est de préférence mise à jour ou simulée dynamiquement par l'application d'enrôlement P1 (et/ou par l'applet NDEF ou de simulation P4) de la carte.

L'application NDEF (ou autre application similaire selon la technologie de communication ou de codage utilisée : 3D, OCR...) peut être configurée pour générer ou simuler une information normalement statique (enregistrement ou information au format NDEF ou code 3D) avant, pendant ou après la mise en oeuvre d'une lecture par le terminal.

L'information peut avoir le caractère ou format d'une information ou fichier statique comme une information NDEF mais elle peut être générée ou simulée en temps réel dynamiquement.

L'information peut être déterminée ou élaborée en fonction (ou en réponse ou à travers) de tout ou partie des actions effectuées (ou même non effectuées) par l'utilisateur pendant le processus d'enrôlement sur le dispositif et/ou le terminal. Les actions peuvent comprendre par exemple, le fait de soumettre la carte au champ du terminal, de brancher le terminal en cas de champ insuffisant, de positionner mieux la carte par rapport au terminal, de placer un doigt sur un capteur d'empreinte, de guider le placement d'un doigt (plus à gauche, à droite, en avant, en arrière...), de taper un code pin sur un clavier du mobile ou de la carte, bref de toute action destinée à effectuer complètement un enrôlement dans de bommes conditions.

Par exemple aussi, un compteur peut être incrémenté chaque fois qu'un utilisateur effectue une action concernant l'enrôlement ou qu'un statut d'erreur est mis à jour en cas de problème afin d'évaluer ultérieurement l'amélioration de l'enrôlement et déclencher si nécessaire une demande de support de l'émetteur au service clientèle ou d'assistance distant.

L'application P4 (seule ou avec l'application P1) de la carte peut de préférence prendre en charge des commandes définies dans la spécification NDEF (par exemple au moins les commandes SELECT Application, select File, et/ou LECTURE Fichier).

La norme NDEF est généralement destinée à fournir des informations statiques (tag ou enregistrement NDEF) stockées ou mémorisés par des terminaux NFC dans des étiquettes (tags) RFID simples, telles que des adresses URLs statiques, des données géographiques, etc. Ces informations sont statiques et inchangées jusqu'à ce qu'elles soient reprogrammés à nouveau avec une nouvelle information par un terminal NFC.

Toutefois, dans le contexte de l'invention, l'application P4 de la carte est capable de modifier, faire évoluer, générer elle-même de nouveaux enregistrement notamment NDEF (ou tag NDEF), 3D, 2D (le cas échéant avec ou sous contrôle de l'application logicielle P1).
L'application d'enrôlement P1 (ou P4) peut être de préférence configurée, (seule ou le cas échéant, avec l'aide de l'applet P4) pour créer dynamiquement une information NDEF encapsulant (ou contenant) tout ou parties des données relatives à l'enrôlement énumérées ci-dessus, y compris l'état dynamique ou instantané de l'enrôlement.

Alternativement et/ou parallèlement, l'application d'enrôlement P1 de la carte peut éventuellement créer (seule ou via P4) une information 2D, 3D à afficher.

L'application logicielle P1 peut également prendre en charge des commandes d'écriture NDEF d'un terminal NFC plus évolué ainsi que des commandes d'autres types. Toutefois, le terminal 1 conforme à l'invention n'a pas la nécessité de comprendre la fonction d'écriture pour permettre un enrôlement efficace.

Quant au terminal ou (lecteur) 3, il peut être choisi notamment parmi un téléphone mobile, un dispositif d'IOT, une montre électronique NFC active (rayonnant du champ radiofréquence, etc.).
Par ailleurs, le terminal 3 a préférence des capacités NFC mais alternativement, il peut avoir des capacités de lecture optique notamment OCR, QR code, etc.

Le terminal 3 peut comprendre de préférence, une application P2 configurée pour être capable de mettre en oeuvre des fonctions élémentaires selon le standard NDEF. Par exemple, il peut comprendre des fonctions de lecture (et/ou de sélection) des informations concernant l'enrôlement comme déjà expliqué. Ces informations peuvent être conservées ou mémorisées dans une mémoire M1 du dispositif 1, par l'application P1 de la carte. La lecture ci-dessus est de préférence une lecture d'enregistrement NDEF simple.

La lecture peut se résumer à lire des codes de guidage représentatifs d'instruction de guidage ou d'assistance dans le dispositif 1 et qui sont lu et interprétés par l'application P2 par comparaison à une liste pré mémorisée d'instructions d'assistance ou de guidage associées à chaque code de guidage, dans une mémoire M2 du terminal.

Alternativement, la lecture peut être une lecture optique, d'informations présentées par une application similaire à P4, pour lecture par reconnaissance de caractères(OCR) ou sous forme de QR code (code 3D) affichées sur un afficheur 5 de la carte. Le terminal peut également comprendre une application correspondante pour lire des codes graphiques affichés.

L'application P2 est configurée pour informer ou guider l'utilisateur sur l'étape suivante à exécuter en fonction des informations lues dans le dispositif, de manière à poursuivre le processus d'enrôlement ou le finaliser.

Ainsi, par exemple, l'application du terminal mobile P2 peut utiliser généralement les informations retournées par le dispositif à travers le contenu du message, (de préférence NDEF) pour :
- identifier un processus d'enrôlement approprié, parmi plusieurs possibles existant dans le mobile, en fonction de la carte notamment en fonction de la configuration de la carte (version, identifiant de la carte), de la taille du capteur, de la technologie d'enrôlement, l'application sera capable d'identifier la carte et de proposer le guidage approprié de l'utilisateur ;
- connaître l'étape courante du processus d'enrôlement dans la carte ;
- diriger ou informer, (de manière conviviale l'utilisateur), sur l'étape suivante à exécuter ;
- En cas d'erreur, un statut d'erreur dans le message peut servir à guider plus précisément l'utilisateur via le terminal, tout au long de la résolution du problème.

Ainsi, selon une caractéristique du mode préféré, le système 1 est configuré de manière que chaque interaction susvisée (entre le terminal 3 et le dispositif 1) comprenne au moins une fonction de lecture (ou commande de lecture) provenant du terminal 3, pour lire ou sélectionner des informations contenues (ou alternativement affichées par lui dans le dispositif 1.
Selon un mode préféré, le système peut mettre en oeuvre des fonctions d'anticollision de communication, de sélection d'application (SELECT AID), de sélection de fichier (SELECT FICHIER), de lecture d'information dans le fichier (READ). Ces fonctions peuvent correspondre à celles normalisées du protocole d'échange NDEF.

Chaque information peut être générée, capturée, simulée dynamiquement (élaborée instantanément ou quasi - instantanément (par exemple, sous environ 37 millisecondes de préférence) ou voire 1 seconde ou 2 secondes) en réponse à la commande de lecture NDEF) ou sélectionnée par le dispositif 1 lui-même à différentes étapes de l'enrôlement.

Ainsi, par exemple, l'information à lire par le terminal (ou sa mise à jour) peut être de préférence élaborée suite à la réception d'une commande de lecture ou dès la mise sous champ électromagnétique ;

De préférence, (pour permettre un maintien du champ électromagnétique alimentant le dispositif), le procédé de l'invention peut prévoir de déclencher l'enrôlement dès la détection ou la réception d'une commande du terminal par le dispositif).

Côté terminal, l'émission d'une commande peut signifier pour le terminal une ouverture de session de communication qui se traduit comme une indication de maintien du champ électromagnétique pour alimenter le dispositif.

Si la session perdure, de manière à effectuer des opérations nécessaires à l'enrôlement et pour éviter une rupture de communication et/ou d'alimentation de champ radiofréquence, le dispositif peut envoyer une réponse d'attente au terminal pendant une préparation de l'information à communiquer au terminal notamment celle relative à l'instruction d'assistance.

Alternativement, à réception d'une commande de lecture (ou autre commande telle que sélection d'application, ou sélection de fichier, etc.), le dispositif 1 peut fournir ou préparer l'information d'assistance demandée en lecture par le terminal.

Cette dernière information peut avoir été préparée à l'avance au cours d'une précédente session (ou précédente interaction du terminal avec le dispositif). Le dispositif peut aussi prévoir de préparer la prochaine information d'assistance à l'avance avant de terminer la session en cours et avant de ne plus avoir d'énergie.

Alternativement, une prochaine information ou instruction d'assistance peut être préparée / déclenchée dans le dispositif par réception de tout signal externe y compris par une action manuelle de l'utilisateur sur un interrupteur du dispositif (en supposant que le dispositif soit alimenté par le champ du terminal ou autrement notamment par batterie).

Entre chaque élaboration d'instruction d'assistance à l'enrôlement, le dispositif peut mémoriser ou pas un état d'avancement ou un indicateur de l'enrôlement.

Un indicateur du niveau d'enrôlement, (pouvant être déterminant pour poursuivre de nouvelle saisie d'empreinte) peut être une mesure (ou détection) du nombre d'empreinte saisie, ou une étendue de la surface d'empreinte déjà saisie. L'indicateur peut comprendre une valeur N et/ou une évaluation R de la quantité ou qualité des minuties d'empreinte digitales décrite plus loin dans la description.

Alternativement, l'invention peut prévoir non pas un suivi et mémorisation de l'état d'enrôlement, mais un suivi d'un déroulé séquentiel d'instructions préétablies à chaque saisie d'empreinte au cours de l'enrôlement.

### Modalités génériques d'enrôlement:

Du point de vue d'utilisateur, la procédure globale (ou générique) à suivre pour l'enrôlement peut être la suivante :
0 : installation ou lancement de l'application mobile P2. Sur Android, cette première étape peut être déclenchée à la première alimentation ou présentation de la carte au mobile NFC.
Un contenu d'enregistrement NDEF, peut déclencher au démarrage (première interaction avec un terminal NFC) l'installation et/ou téléchargement de l'application mobile.

Le cas échéant, le dispositif comprend une information interprétable (affichée ou imprimée sur le dispositif pour lecture optique), sous forme notamment d'un code optique 2D, 3D ou une information lisible par OCR et interprétable par le terminal pour déclencher suite à lecture du terminal par photographie, ou lecture OCR, un téléchargement comme ci-dessus et une installation de l'application P2 de gestion d'enrôlement.

Le cas échéant, les applications P1, P3 (ou une mise à jour) peuvent être téléchargées par le mobile et chargées ensuite dans le dispositif par tout moyen de communication notamment NFC, Bluetooth....
1 : Présentation de la carte.
2 : Lecture des instructions sur l'étape suivante à exécuter.
3 : Exécuter l'opération.
4 : si l'enrôlement n'est pas faite, réitérer sur 1.

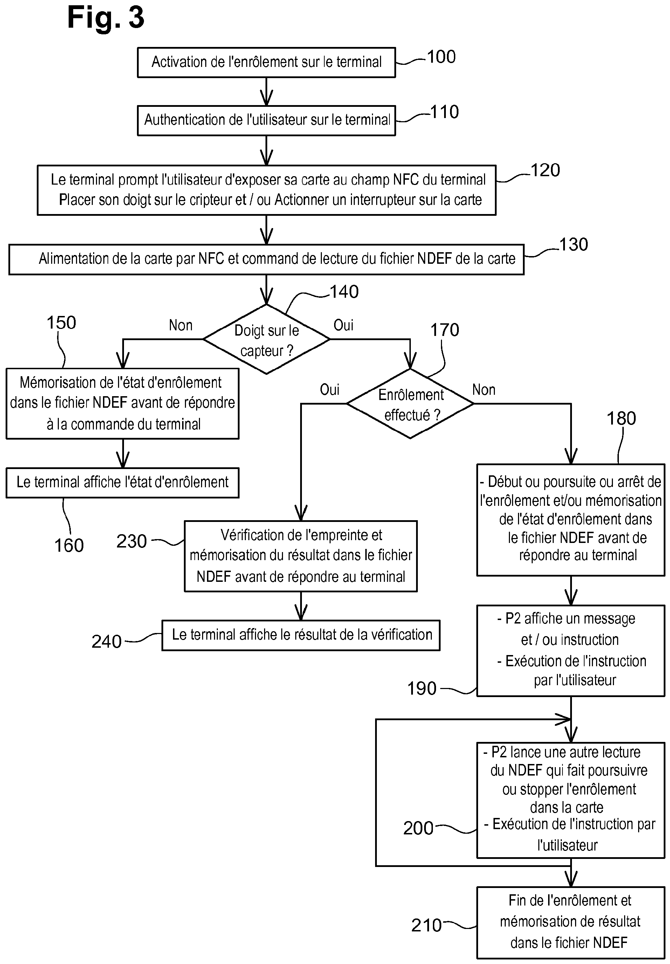

### Le procédé d'enrôlement (ou authentification) va maintenant être décrit en relation avec la figure 3.

- A l'étape 100, un utilisateur active une application logicielle d'enrôlement P2 du terminal 3, pour s'enrôler à l'aide d'une fonction d'enrôlement P1 résidant dans une carte biométrique 1 ;
- A l'étape 110, l'utilisateur peut de préférence s'authentifier sur l'application P2 en utilisant une interface IHM (clavier, ou autre) quelconque du terminal ;
- A l'étape 120, l'application P2 peut demander à l'utilisateur de mettre la carte proche du terminal (pour recevoir le champ radiofréquence du terminal et le cas échéant, alimenter la carte,) ; P2 peut demander aussi à l'utilisateur de positionner son doigt sur le capteur biométrique (et/ou d'actionner un autre possible interrupteur ou bouton de clavier de la carte) pour initier ou poursuivre l'enrôlement);
- A l'étape 130, l'application P2 active le champ électromagnétique de l'interface NFC 8 du terminal et fait envoyer par le terminal 3 une commande de lecture du fichier NDEF sur la carte, via le champ électromagnétique RF du terminal;
- Alternativement, la commande de lecture peut être une commande de lecture optique ou prise de photographie d'une information de type code 2D, 3D ou autre par OCR présente ou affichée sur la carte ;
- Ainsi, la carte peut donner une indication de l'état ou statut d'enrôlement au terminal (et à l'utilisateur) ou déterminer si elle initie, poursuit l'enrôlement ou si elle vérifie simplement pour authentification une empreinte du doigt sur le capteur;
- A l'étape 140, (étape de test de présence de doigt), le système (notamment la carte) reçoit la commande de lecture du terminal, (notamment du fichier NDEF), qui est exploitée ou interprétée par exemple par l'application P4 (applet NDEF) et P4 met en oeuvre, directement seul (ou passe la main à P1 ou coopère avec P1 pour mettre en oeuvre), un test afin de déterminer si un doigt est sur le capteur : Le capteur 4 peut générer un signal (ou des données d'empreintes digitales) détecté par le microcontrôleur SE ou un microcontrôleur associé MCU BIO, puis porté à la connaissance de l'application P1 et/ou P4 de la carte;
- A l'étape 150, branche non, (pas de doigt sur le capteur) le carte peut quand même mémoriser dynamiquement un état d'absence de doigt et/ou un état d'avancement d'un enrôlement dans le fichier NDEF du dispositif, avant d'envoyer la réponse à la commande de lecture du terminal ;
- La carte peut aussi simuler instantanément une réponse au format NDEF; La réponse peut ainsi renseigner le terminal au moins sur l'état d'avancement de l'enrôlement;
- A l'étape 160, suite à la lecture du terminal 3, l'application P2 du terminal peut faire afficher par le terminal l'état d'enrôlement lu à l'étape précédente, sur un afficheur 5 du terminal;
- A l'étape 170, via la branche oui du test 140 (doigt sur le capteur ?), la carte (notamment via P1) procède à un second test pour savoir si l'enrôlement est effectué ou pas ; L'information résultante peut être éventuellement préparée dans la réponse au terminal, soit en la mettant dans le fichier NDEF, soit en simulant ce fichier au format NDEF (ou alternativement en affichant l'information en code optique);
   Ainsi, l'application P2 du terminal, peut par exemple, lire le fichier NDEF ou un indicateur dans une mémoire M1 (ou registre), indiquant le statut de l'enrôlement (ex. effectué, non effectué ou en cours et/ou indication d'un problème rencontré avec la nature du problème) ;
- Cependant dans le cas où l'enrôlement n'est pas effectué ou est en cours, l'application P1 ayant connaissance de l'information correspondante, va directement procéder au début ou à la poursuite d'enrôlement comme ci-après à l'étape 180;
- Dans le contraire, « enrôlement effectué et doigt sur le capteur », la vérification ou authentification de l'empreinte du doigt peut être effectuée à l'étape 230 et 240 ;
- A l'étape 180, (dans le cas d'enrôlement non effectué ou non terminé), la carte (via P1) initie ou poursuit le processus d'enrôlement et peut mémoriser l'état d'enrôlement dans le fichier NDEF avant d'envoyer la réponse à la commande de lecture du terminal ; La carte peut répondre au terminal l'information ci-après « enrôlement en cours » et peut profiter de la première commande de lecture du terminal pour donner une instruction d'enrôlement à l'utilisateur.

En effet, suite à la détection de présence de doigt sur le capteur, l'enrôlement n'étant pas terminé ou initié (branche non du test 170), l'empreinte captée (à l'étape 140) peut être utilisée avantageusement pour initier ou poursuivre l'enrôlement. Ainsi, le procédé d'enrôlement peut être déclenché ou poursuivi dès qu'un doigt et posé sur le capteur et gagner du temps dans ce processus d'enrôlement.

Alternativement, P1, peut se contenter d'exécuter ou de suivre séquentiellement des instructions préétablies dans la carte (M1) ou préparer dynamiquement ou non (ou simuler dynamiquement sur l'instant de la session de communication ou du moins en réponse à la commande de lecture NDEF), des informations d'assistance à l'enrôlement, destinées à être lues par le terminal à l'attention de l'utilisateur;
- A l'étape 190, P2 affiche l'information lue contenant éventuellement et de préférence une instruction ou message d'assistance, par exemple : « Enlevez et Positionnez à nouveau votre doigt sur le capteur » et / ou l'information de statut de l'enrôlement, « Enrôlement en cours » ; ce message peut être généré ou simulé ou sélectionné par l'application P1 dans une liste d'instructions séquentielles préétablies (seul ou en coopération avec le cas échéant, avec l'applet P4) puis affiché sur le terminal via l'application P2, pour initier ou poursuivre l'enrôlement de son empreinte de doigt ;

Généralement, dans tous les modes de réalisation, le message peut être transmis à l'utilisateur autrement que par affichage notamment par émission sonore ; Puis, l'utilisateur s'exécute en suivant l'instruction et pose son doigt sur le capteur à nouveau ;
- A l'étape 200, il peut se produire des opérations identiques ou similaires aux étapes cumulées 130 puis 180 dans cet ordre.

Ces opérations peuvent être réitérées plusieurs fois par l'application P2, jusqu'à satisfaire les critères d'enrôlement. Ainsi, l'enrôlement peut être effectué au cours de plusieurs sessions de commande / réponse. Elles peuvent intervenir toutes dans la foulée successivement par exemple, pendant quelques minutes un seul jour ou intervenir chacune sur des jours différents.

Le terminal 3 via P2 peut, réactiver le champ radiofréquence si nécessaire, et envoyer une seconde commande de lecture du fichier NDEF qui va déclencher ou poursuivre le processus d'enrôlement dans la carte (selon que l'empreinte précédente ait été ou non utilisée) ;
Ce nouveau message reçu par le terminal suite à cette seconde lecture peut être une instruction de présenter à nouveau le doigt sur le capteur comme précédemment ou d'indiquer que l'enrôlement va être terminé (étape 210 ci-dessous).

Chaque enregistrement ou message lu par le terminal peut être affiché sur un écran du terminal par l'application P2 et l'utilisateur peut suivre le message (ou instruction) affichée par l'application P2 sur le terminal en présentant à nouveau son doigt pour capturer et enrôler son empreinte de doigt ;
- Durant le processus d'enrôlement, qui peut prendre plusieurs secondes voire minutes, la carte peut générer des messages WTX (extending waiting frame en anglais) qui va permettre de demander au terminal d'attendre pour recevoir la réponse de la carte pendant un traitement de la carte qui peut être plus long que prévu.

Durant ce temps, le doigt peut être détecté par le capteur de la carte, et une nouvelle empreinte peut être captée sur le capteur et mémorisé dans une mémoire M1 de la carte, et simultanément, un compteur peut être incrémenté pour atteindre une valeur N et/ou une évaluation R de la quantité ou qualité des minuties d'empreinte digitales. Ces valeurs R et /ou N peuvent être mémorisées dans la mémoire M1 dans la carte ;
- A l'étape, 210, il peut être mis fin au processus d'enrôlement, (N et/ou R dépassant des valeurs préétablies, mais il peut être poursuivi pour améliorer l'enrôlement) et en réponse la carte élabore un message NDEF en intégrant ou considérant les informations « R » et/ou « N », dans un fichier NDEF ; ce qui produit instantanément (ou à la prochaine lecture) un nouveau (second) message ou enregistrement élaboré par l'application d'enrôlement P1 (ou par P4 seul ou en coopération avec P1) de la carte. Ce nouveau enregistrement ou message peut se substituer dynamiquement au précédent dans la mémoire M1 (premier message ou enregistrement) ;
- A l'étape 210, l'enrôlement est suffisamment complet ou terminé, par exemple parce que la valeur N et/ou de R est suffisante ; La carte via l'application P1, mémorise ces valeurs ou une information représentative de l'achèvement dans un fichier NDEF ;
- A l'étape 230, (cas où l'enrôlement est réalisé, branche oui à l'étape 170), la carte initie un processus de vérification de l'empreinte (car détectée à l'étape 130 et enrôlement terminé), puis elle mémorise le résultat de vérification dans le fichier NDEF avant d'envoyer la réponse à la commande de lecture du terminal ;
- A l'étape 240, l'application P2 du terminal fait afficher (ou communique autrement par message vocal) le résultat de la vérification à l'utilisateur.
- Le processus d'enrôlement est maintenant terminé.

De manière générale dans les exemples, lorsque l'utilisateur souhaite utiliser l'enregistrement NDEF, il peut l'utiliser tout simplement en le lisant avec une instruction de lecture du terminal mobile. L'enregistrement (message) lu est utilisé comme les enregistrements statiques enregistrés dans des étiquettes RFID, mais en fait, l'enregistrement a été mis à jour peu de temps avant car le dispositif a des capacités dynamiques de génération d'information NDEF.

Par exemple, une information NDEF peut être générée par le dispositif pendant une durée d'une commande / réponse pouvant aller, par exemple jusqu'à 2 secondes. Alternativement, la durée peut représenter environ 25 fois la durée d'une commande / réponse définie par le standard EMV.

Le cas échéant, une réponse d'attente ou de réitération de la lecture peut être émise par le dispositif le temps de créer dynamiquement une nouvelle information destinée à être lue par le terminal. L'information nouvelle une fois créée, peut avoir les mêmes attributs qu'une information NDEF statique. Toutefois, le dispositif a la capacité de faire varier dynamiquement cette information.

De préférence, le processus d'enrôlement sur la carte (ou dispositif) est exécuté lors d'une session de lecture NDEF pour éviter que le mobile coupe le champ entre deux lectures de NDEF. Une même session peut être maintenue ouverte notamment par des messages WTX de demande d'attente du dispositif, conformes au protocole ISO 14443.
Par ailleurs, le dispositif même en étant passif, peut piloter plusieurs opérations successives du terminal avec des informations mémorisées ou affichées par le dispositif (sans que le dispositif puisse être lui-même actif vis-à-vis du terminal). Il peut par exemple préparer des messages demandant de réitérer une nouvelle lecture après un laps de temps ou tout autre message, même après clôture de session et coupure de champ du terminal.

Dans une même information, le dispositif peut insérer une information relative à l'enrôlement et une information de pilotage du terminal, comme lui demander de lancer une nouvelle lecture notamment dans une nouvelle session.

Dans l'état de la technique, il semble que seulement des enregistrements NDEF statiques enregistrés dans les dispositifs d'étiquette RFID sont actuellement lues par des mobile NFC).

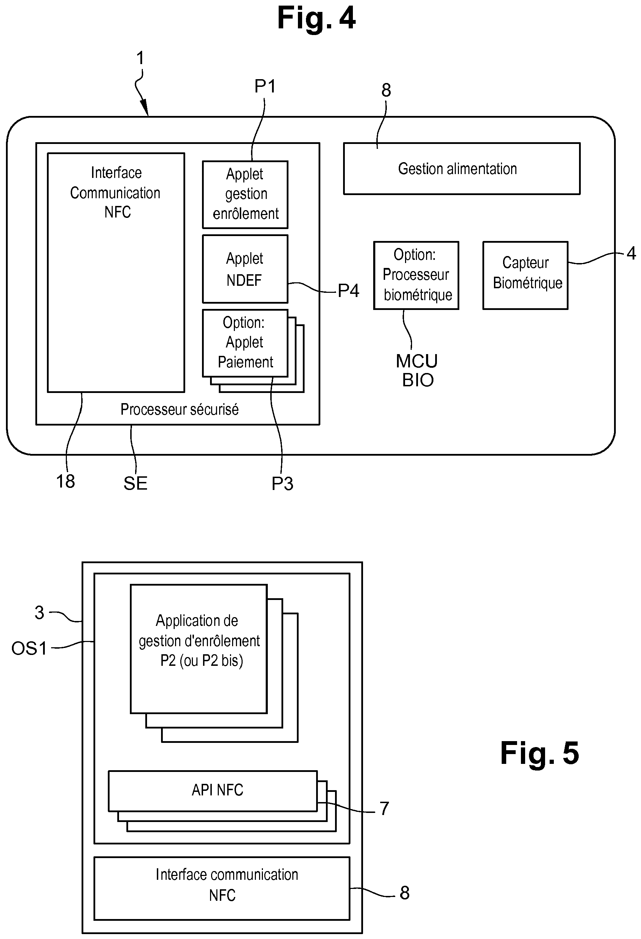

La figure 5 illustre une architecture matérielle possible d'un terminal de communication portable électronique 3 ; Il peut comprendre un système d'exploitation OS1 pour exécuter une application logicielle de gestion d'enrôlement (Application Enrôlement) P2bis similaire ou identique à P2). Cette application logicielle s'appuie sur une bibliothèque API NFC de communication fournit par the système d'exploitation OS1. Le terminal comprend une interface de communication NFC fonctionnant au moins en mode lecture pour lire des informations contenues dans ou présentées par un dispositif 1, tel une carte à puce.
- La figure 4 illustre une architecture matérielle possible, plus détaillée d'un dispositif 1 de l'invention ;
Le dispositif 1, ici sous forme de carte sans contact comprend une applet (ou application logicielle) de gestion d'enrôlement P1.

Cette application P1 s'appuie sur une interface de communication 18 fournit par le système d'exploitation d'un microcontrôleur sécurisé SE.
Le fichier NDEF contenant l'information NDEF à lire par le terminal 3, peut être simulé ou généré à l'aide d'une application P4 qui va permettre de répondre aux commandes de lecture NDEF.

Les données biométriques sont acquises par l'intermédiaire d'un capteur 4, associé optionnellement à un processeur biométrique complémentaire (MCU BIO) spécialisé pour traiter l'information biométrique captée. Le dispositif comprend un gestionnaire d'alimentation 8 des différents composants du dispositif, selon les sources d'énergie disponibles parmi notamment le champ électromagnétique d'un terminal 3 (et/ou optionnellement une batterie).

D'une manière générale, tout ou partie des fonctions de l'application logicielle P1 peut être comprise dans l'application P4 et inversement.

L'invention peut également comprendre un mode supplémentaire de fonctionnement pouvant être plus rapide, ci-après.

Selon ce mode supplémentaire, l'enrôlement peut comprendre des saisies successives d'empreintes différentes effectuées pendant une même session de communication notamment de commande / réponse entre le terminal et le dispositif.

Une session de communication radiofréquence de type commande / réponse peut être maintenue ouverte notamment par l'utilisation de demandes d'extension WTX de temps de session standard qui peut être de l'ordre de 37,8 mm seconde selon le standard EMV.
- Les étapes 100 à 110 peuvent être comme précédemment ;
- A l'étape 120, le terminal peut demander à l'utilisateur de poser et enlever plusieurs fois le doigt sur le capteur du dispositif.
De préférence, le terminal peut demander à l'utilisateur de faire cette opération successivement en déplaçant le doigt à chaque fois pour couvrir le maximum de surface du doigt.
- L'étape 130 se passe comme précédemment, le terminal émettant du champ radiofréquence et envoyant une commande de lecture du fichier NDEF.
- Les étapes 140 à 180 peuvent de dérouler sensiblement comme précédemment toutefois, le dispositif procède via son MCU BIO à des lectures ou captures réitérées ou en boucle d'empreintes de doigt sur le capteur.
- Chaque nouvelle empreinte est mémorisée dans une mémoire et comparée à la dernière empreinte captée et mémorisée. Si la nouvelle empreinte est différente de la dernière empreinte, elle est conservée pour être ajoutée au modèle d'empreinte de référence existant ou en préparation dans le dispositif et un taux d'enrôlement est calculé et ainsi de suite, de nouvelles empreintes sont captées en un laps de temps qui peut être très court durant 1 à 3 minutes.
- Dans le cas où la nouvelle empreinte est la même que la dernière (ou précédente), le MCU BIO ou le SE comprend que l'utilisateur n'a pas enlevé et repositionné son doigt et la nouvelle empreinte n'est pas utilisée, ni sauvegardée.

Cette opération d'enrôlement comprenant des saisies successives peut être effectuée notamment parce que le dispositif a prévu d'envoyer des demandes WTX d'extension de durée de session de commande / réponse. Ainsi, le champ radiofréquence peut être maintenu pendant une même session le temps de capturer une série d'empreintes différentes d'enrôlement et avant d'envoyer une réponse à la commande de lecture du terminal.

Le dispositif peut comprendre un indicateur tel qu'une LED, un micro afficheur qui peut indiquer un taux de progression de l'enrôlement ou un taux de remplissage ou constitution du modèle d'empreinte de référence. L'affichage peut être une barre de progression et/ou un pourcentage dont la valeur est rafraichie au fur et à mesure de la saisie.

La LED peut clignoter tant que l'enrôlement est insuffisant et être non clignotant quand il est terminé.

Ainsi, l'invention peut prévoir de combiner (compléter) des solutions de l'art antérieur avec celles proposées ici pour informer ou guider l'utilisateur dans le processus d'enrôlement.

Il est également, possible notamment en cas de problème ou à tout moment que le dispositif puisse communiquer avec l'utilisateur en affichant un message notamment par code 2D, 3D, (QR code) sur un afficheur notamment bistable.

Ainsi, l'utilisateur peut savoir à quel stade de l'enrôlement il se trouve ou en cas de problème ou autre, il peut récupérer l'information par simple lecture optique à l'aide de son terminal. La lecture optique, peut être traduite / transposée, notamment par synthèse vocale, à l'utilisateur ou être affichée en plus gros caractère sur le terminal. L'utilisateur n'a pas besoin de relancer le programme d'enrôlement du terminal pour savoir où il en est dans son enrôlement.

Dans le cas où la progression stagne ou le taux demeure insuffisant (inférieur à 100 %), un programme d'analyse P5 (ou dans P1) dans le dispositif peut être configuré pour être capable de déterminer où se trouve le problème ou de déterminer une zone de doigt à compléter ou à refaire pour des raisons notamment de mauvaise capture (pression insuffisante ou durée insuffisante de maintien du doigt en place sur le capteur).
Alors, le programme P5 (ou P1) prépare un message plus détaillé à destination de l'utilisateur pour refaire une saisie de doigt pour une zone manquante. Ce message plus détaillé peut être préparé sous forme d'enregistrement NDEF.

Par exemple, des messages ci-après peuvent être émis parmi : « placer la pointe du doigt sur le capteur ; replacer le doigt centré sur le capteur ; placer le côté gauche ou droit du doigt sur le capteur ; maintenez plus de pression sur le capteur ; erreur de capture, veuillez nettoyer le doigt et/ou le capteur ».
Le dispositif peut arrêter d'envoyer des demandes d'extension de temps quand la réponse contenant le message NDEF est donnée au terminal.
Le terminal peut alors afficher (ou communiquer autrement), l'instruction ou information lue à l'utilisateur, terminer la session (champ coupé) puis relancer une nouvelle lecture ultérieurement et réactiver le champ à nouveau.

Ainsi, il est possible d'effectuer plusieurs captures rapidement en une seule session et s'approcher assez près du taux satisfaisant d'enrôlement (par exemple, 50%, 70, 80 %, 90% voire même de le satisfaire complètement en une seule session de commande / réponse.

Dans ce dernier cas, le programme d'analyse (P5 ou P1) peut préparer directement au cours d'une même session de commande / réponse, un message de taux d'enrôlement satisfaisant à 100% après au moins une saisie ou plusieurs saisies.

En principe, selon la dimension du capteur ou algorithmes impliqué dans l'authentification, il peut être nécessaire de capturer par exemple une à 7 empreintes complémentaires d'un même doigt.

Le message NDEF peut alors comprendre par exemple : « Enrôlement terminé, veuillez enlever votre doigt du capteur et éloigner la carte du terminal ».

Le cas échéant, le procédé (selon un mode complémentaire à ceux décrits) peut prévoir d'enrôler un second doigt et dans ce cas, le message à l'attention de l'utilisateur peut être « Enrôlement avec un premier doigt terminé, veuillez placer votre second doigt sur le capteur pour un second enrôlement ».

Pour tester l'efficacité du modèle d'empreinte, le programme du terminal P2 peut prévoir de mettre en oeuvre les étapes 100 à 240 (via la branche « oui, enrôlement effectué » à l'issu de l'étape 170). A cet effet, le libellé de l'étape 100 devient une étape 100bis « Activation d'un test du modèle d'empreinte de référence » ; Cette opération peut être choisie sur un menu affiché à l'écran du terminal. L'utilisateur peut ainsi savoir à l'avance pour le rassuré (hors transaction) si sa carte fonctionne correctement pour s'authentifier.
- A l'étape 240, comme vu précédemment, le terminal affiche le résultat de la vérification ou du test d'authentification.

L'invention a l'avantage de pouvoir s'affranchir de batterie dans le dispositif, bien qu'elle puisse s'appliquer à des dispositifs avec batterie ou autre source d'énergie. Elle permet de ne pas solliciter une batterie éventuelle dans le dispositif d'autant plus qu'une série d'enrôlement peut requérir une consommation d'énergie importante que le dispositif peut ne pas être en mesure de fournir.

L'application P2 du terminal peut prévoir de demander à l'utilisateur de brancher son terminal au secteur avant de commencer l'enrôlement. Il peut aussi prévoir de conditionner le début d'enrôlement au branchement du terminal au secteur (ou réseau électrique) ou à la détection d'un niveau de batterie suffisant.

## Revendications

1. Procédé d'enrôlement de données biométriques d'un utilisateur dans un dispositif portable (1) de saisie biométrique dans lequel, le procédé met en oeuvre des étapes :
- d'assistance aux différentes étapes de l'enrôlement via un terminal (3) de communication, par des interactions successives entre le terminal et ledit dispositif tout au long de l'enrôlement,
caractérisé en que chaque interaction met en oeuvre au moins une lecture du terminal pour lire des informations contenues dans ou affichées sur ledit dispositif (1),
et en ce que chaque information est générée, simulée ou sélectionnée par le dispositif (1) à différentes étapes de l'enrôlement.

2. Procédé selon la revendication précédente, caractérisé en que chaque information comprend des instructions d'assistance élaborées ou sélectionnées dans la carte.

3. Procédé selon l'une des revendications précédentes, caractérisé en qu'il comprend une étape d'élaboration ou de sélection d'instructions d'assistance dans le terminal en fonction de chaque information lue dans le dispositif par le terminal et une étape de présentation d'instructions d'assistance.

4. Procédé selon l'une des revendications précédentes, caractérisé en que chaque information est générée suite à une détection ou une réception d'une commande du terminal, ou après la collecte ou la capture de nouvelles données biométriques dans le dispositif portable.

5. Procédé selon l'une des revendications précédentes, caractérisé en que chaque information, différente de la précédente, est générée dynamiquement et mémorisée dans un fichier interne destiné à être lu par le terminal.

6. Procédé selon l'une des revendications précédentes, caractérisé en qu'il comprend la fourniture :
- d'une application logicielle NDEF (P4) dans ledit dispositif portable (1),
- d'une application logicielle d'assistance à l'enrôlement (P1) dans ledit dispositif portable et/ou ledit terminal (3),
- l'application logicielle NDEF (P4) étant configurée pour générer un second enregistrement NDEF différant d'un premier enregistrement précédent, basé sur des données recueillies au cours de l'enrôlement.

7. Procédé selon l'une des revendications précédentes, caractérisé en que ledit enregistrement NDEF est créé en temps réel ou dynamiquement à un format compatible avec les enregistrements standards NDEF.

8. Procédé selon l'une des revendications précédentes, **caractérisé en ce que** ledit enregistrement NDEF dans le dispositif portable (1) est capturé par le terminal NFC dans un mode lecture seule du terminal.

9. Procédé selon l'une des revendications précédentes, **caractérisé en ce que** ladite application logicielle NDEF (P4) est configurée pour réaliser les opérations suivantes :
- transformation en données utiles d'assistance à l'enrôlement, de données associées à des données recueillies par le dispositif portable ;
- insertion desdites données utiles d'assistance dans un enregistrement ou un fichier NDEF, à sélectionner pour une lecture du terminal et,
- calcul, au cours d'une même session de communication (22) entre le terminal et le dispositif, de la longueur de l'enregistrement et/ou message NDEF généré.

10. Procédé selon l'une des revendications précédentes, caractérisé en que ledit dispositif (1) comprend une application bancaire EMV (P3) et une application d'enrôlement (P1).

11. Procédé selon l'une des revendications précédentes, **caractérisé en ce que** ledit dispositif NFC comprend un dispositif bancaire NFC avec un lecteur d'empreintes digitales (5), et dans lequel lesdites données collectées incluent des informations liées aux empreintes digitales (2), lues par le lecteur d'empreintes digitales.

12. Procédé selon l'une des revendications précédentes, **caractérisé en ce que** ledit terminal (3) est configuré pour effectuer des lectures successives espacées dans le temps.

13. Procédé selon l'une des revendications précédentes, **caractérisé en ce que** ledit dispositif (1) est configuré pour élaborer un enregistrement ou message d'attente ou un message incluant une instruction au terminal pour lui demander de lire à nouveau après un délai d'attente ou un message effectuer des lectures successives plus espacées dans le temps.

14. Procédé selon l'une des revendications précédentes, **caractérisé en ce que** chaque interaction de lecture met en oeuvre au moins au préalable une commande de sélection d'application, une commande de sélection de fichier conforme au standard NDEF.

15. Procédé selon l'une des revendications précédentes, **caractérisé en ce que** le dispositif est configuré pour effectuer des saisies successives d'empreintes différentes pendant une même session de communication entre le terminal et le dispositif.

16. Système (S1) d'enrôlement de données biométriques d'un utilisateur (2) dans un dispositif portable (1) de saisie biométrique dans lequel,
ledit système étant configuré pour assister l'utilisateur aux différentes étapes de l'enrôlement via un terminal (3) de communication, par des interactions successives entre le terminal et ledit dispositif tout au long de l'enrôlement, caractérisé en qu'il est configuré de manière que :
- chaque interaction comprenne au moins une lecture à l'initiative du terminal, pour lire des informations contenues ou affichées dans ledit dispositif,
et en ce que chaque information est générée, simulée ou sélectionnée par le dispositif (1) lui-même à différentes étapes de l'enrôlement.

17. Système selon la revendication précédente, caractérisé en ledit dispositif (1) comprend au moins :
- une application logicielle (P4) configurée pour gérer un protocole NDEF,
- un logiciel spécifique (P3),
- un capteur biométrique (4),
- au moins une mémoire (M1) contenant une logique de comparaison biométrique mémorisée et au moins un modèle biométrique.

18. Système selon la revendication précédente, **caractérisé en ce que** ledit dispositif (1) est choisi parmi
- une carte à puce sans contact, un appareil portable, un appareil IOT, une montre électronique, un bracelet.

19. Système selon l'une quelconque des revendications 16 à 18, **caractérisé en ce que** le terminal (3) comprend un lecteur NFC choisi parmi un téléphone mobile, un appareil d'IOT, une montre électronique NFC.
